# EUROPEAN PATENT SPECIFICATION

(11) **EP 0 251 409 B1**
(45) Date of publication and mention of the grant of the patent: **10.02.1993**
(21) Application number: 87201220.8
(22) Date of filing: 25.06.1987
(51) Int. Cl.: A01D 34/66

(54) **A mowing machine**
Mähmaschine
Faucheuse

(30) Priority: 30.06.1986 NL 8601703
(43) Date of publication of application: 07.01.1988
(73) Proprietor: C. van der Lely N.V., NL-3155 PD Maasland (NL)
(72) Inventor: Van der Lely, Ary, Maasland (NL); Bom, Cornelis Johannes G., Rozenburg (NL)
(74) Representative: Mulder, Herman

(56) References cited:
- EP-A- 0 009 134
- EP-A- 0 126 518
- EP-A- 0 135 459
- DE-A- 2 524 348
- FR-A- 1 524 150
- GB-A- 2 022 382
- GB-A- 2 089 634
- NL-A- 8 501 281
- US-A- 3 507 102

## Description

The invention concerns a mowing machine comprising mowing members provided on a supporting beam, said mowing members being connected to transmission members located in said supporting beam, at least one of the mowing members is coupled to an upwardly extending drum-shaped member which is rotatable about the axis of rotation of said one mowing member and which drum-shaped member encloses a drive-shaft, the uper end of which is bearing-supported in a transmission box, and the lower end of which is coupled to the transmission members in the supporting beam, the mowing machine comprises a carrier which is provided with coupling means by means of which the mowing machine can be coupled to a tractor or a suchlike vehicle, the transmission box accommodating gear wheels, through which the drive shaft is coupled to further drive means which can be coupled to the tractor or suchlike vehicle.

A mowing machine of this kind is known from the GB-A-2 022 382.

The invention contemplates to improve a mowing machine of the above-defined type in such a manner that its mowing action can be improved for a variety of purposes. According to the invention, this can be achieved in that the supporting beam consist at least substantially of detachably interconnected sections including drive units to which the mowing members are mounted rotatably, the transmission box, said one mowing member and its drive unit, the drive shaft and the drum-shaped member being together connected detachably as a prefabricated unit to the carrier.

Thus, there can be obtained a mowing machine which can be fabricated and constructed in a favourable way. Due to its construction, the mowing machine can be designed advantageously without being too heavy, but yet being very strong. By means of the construction according to the invention, it is possible to mow the crop and/or to discharge the mown crop in an advantageous manner. The mowing machine according to the invention does not contain any parts that may obstruct the mowing action and/or the discharge of the mown crop, whilst the mowing machine can be of a strong and relatively light construction.

An advantageous embodiment of the mowing machine according to the invention is obtained when seen in plan view, the carrier extends laterally from the mowing members and one end of a carrier arm of the carrier being pivotably coupled to connection lugs of the transmission box. Hereby the mowing machine can be connected to a tractor in such a way that, during operation, a strip of land can be mown laterally of the tractor.

In a further embodiment, the transmission box is connected to the upper end of a support means, which support means is connected to the drive unit to which is mounted the mowing member attached to the said drum-shaped member. The support means constitutes a proper connection between the transmission box and the drive unit, it substantially not being possible for said support means to negatively influence the mowing action and the discharge of the mown crop. In a further construction of a mowing machine according to the invention, the carrier is located at least substantially above the mowing members. This results in an advantageous construction which is particularly suitable for attachment of the mowing machine to the front side of a tractor or a suchlike vehicle. The carrier may then extend at least substantially over the entire length through which the mowing members are provided. A strong construction is obtained when the two ends of the carrier are connected to a drive unit.

The EP-A-0 165 624 shows a mowing machine having mowing members coupled to a supporting beam consisting of detachably interconnected sections. However this known construction do not have a drum-shaped member and the said mowing member do not form a prefabricated unit together with a transmission box, a drum-shaped member with a drive shaft and a drive unit.

For a better understanding of the present invention and to show how the same may be carried into effect, reference will now be made, by way of example, to the accompanying drawings, in which:
Figure 1 is a plan view of a mower according to the invention;
Figure 2 is a rear view of a part of the mower, taken in the direction of the arrow II in Figure 1;
Figure 3 is a view of the mower, taken on the line III-III in Figure 2;
Figure 4 is, to an enlarged scale, a rear,view of a part of the mower, taken in the direction of the arrow IV in Figure 1;
Figure 5 is a plan view of a second embodiment of a mower according to the invention;
Figure 6 is a rear view of the mower of Figure 5, taken in the direction of the arrow VI in Figure 5, and
Figure 7 is, to an enlarged scale, a rear view of a part of the mower, taken in the direction of the arrow VII in Figure 5.

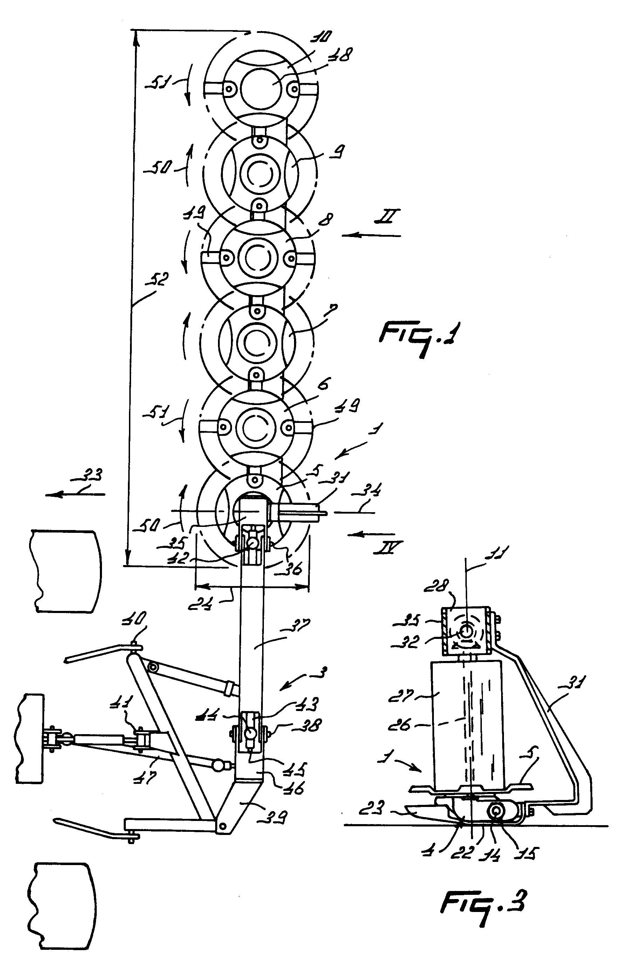

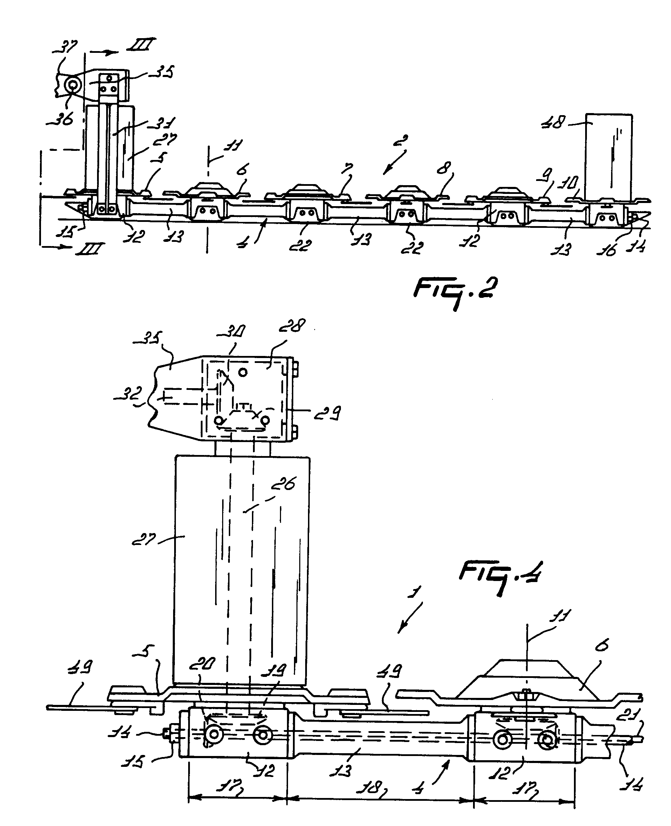

The mower 1 shown in Figures 1 to 4 comprises a mowing section 2 and a carrier 3. The mowing section 2 includes a supporting beam 4 to which there are fitted a number of mowing members, e.g. six mowing members 5 to 10 in this embodiment. Each one of the mowing members 5 to 10 is connected to the supporting beam 4 in such a way that, during normal operation of the implement, they are rotatable about upwardly extending axes of rotation 11.

In essence, the supporting beam 4 is assembled from a plurality of drive units 12 and intermediate sections 13. Each one of the drive units 12 is provided with a mowing member, so that in this embodiment there are also six drive units with five interposed intermediate sections 13. In this embodiment, the drive units and intermediate sections 13 consist of hollow, cast-metal components which are interconnected by an interconnection member 14. In a manner not further shown, the interconnection member 14 extends through the space formed through the drive units 12 and the intermediate sections 13 and, near the ends of the supporting beam 4, is provided with nuts 15 and 16. At least one of the nuts is applied capable of rotation on a threaded end of said member 14. The drive units 12 and the intermediate sections 13 are clamped together by said interconnection member. The clamping pressure can be increased or decreased by turning at least one of the nuts 15 or 16. Thus, the contiguous drive units 12 and intermediate sections 13 are clamped up against each other under tension. This provides a very strong construction of the supporting beam 4 without it being necessary for the drive units 12 and the intermediate sections 13 to be large. In this embodiment, the intermediate sections 13 have a length 18 which is almost twice the length 17 of the drive units 12. Alternatively, this ratio may be chosen differently and will depend in particular on the diameter 24 of the mowing members.

In the supporting beam 4 there are accommodated transmission members for the drive of the mowing members. The mowing members are interconnected via the transmission members. The transmission members in the supporting beam 4 substantially consist of conical gear wheels 19 and 20 provided in each of the drive units 12, and a coupling shaft 21. The gear wheels 19 are coupled to shafts on which the mowing members are provided, which is not shown in further detail in the drawings. The conical gear wheels 20 are coupled to the coupling shaft 21, which extends at least substantially over the entire length of the supporting beam 4. In this situation, the coupling shaft 21 is located in the hollow space formed through the drive units 12 and the intermediate sections 13.

Each of the drive units 12 has at its bottom side a supporting shoe 22, by means of which the mower 2 can bear on the soil with at least part of its weight. The supporting shoes 22 include protection members 23, not further shown, which members are located at the front side of the beam and below the front side of the mowing members.

The mowing member 5 disposed near one end of the supporting beam 4 is connected to a drive shaft 26. The centre line of the drive shaft 26 coincides with the axis of rotation 11 of the mowing member 5. By means of its lower end, the drive shaft 26 is connected to the conical gear wheel 19 of the conical gear wheels provided in the drive unit 12 of the mowing member 5. In this embodiment, the drive shaft 26 is rigidly connected to the conical gear wheel 19. Above the mowing member 5 there is fitted a drum-shaped member 27, the centre line of which coincides with the axis of rotation 11 and with the centre line of the drive shaft 26. The upper end of the drive shaft 26 is connected to a conical gear wheel 29 accommodated in a transmission box 28. The gear wheel 29 cooperates with a conical gear wheel 30 which is also accommodated in the transmission box 28. The transmission box 28 is connected to the upper side of a support means 31. With respect to the direction of operative travel 33 of the mower, the support means 31 is located behind the drum-shaped member 27. In addition, the support means 31 is connected to the drive unit 12 of the mowing member 5. The mid-way point of the support means 31 is contained in a plane 34 which includes the axis of rotation 11 of the mowing member 5 and extends parallel to the direction of operative travel 33. Between the transmission box 28 and the drive unit 12, the support means 31 is folded outwardly to the rear to such an extent that it is located behind the periphery of the mowing member 5 and from there extends to below the mowing member to as far as the rear side of the drive unit 12, to which it is attached.

The transmission box 28 has connection lugs 35. A carrier arm 37 of the carrier 3 is fitted to said connection lugs 35 by means of a pivotal shaft 36. The pivotal shaft 36 is located at least substantially parallel to the direction of operative travel 33. By means of a pivotal shaft 38, the other end of the carrier arm 37 is coupled pivotally to a connecting trestle 39 which forms part of the carrier 3. The connecting trestle 39 includes two coupling pins 40 and coupling strips 41, by means of which the connecting trestle and consequently the mower can be coupled to the three-point lifting hitch of a tractor or a suchlike vehicle.

The conical gear wheel 30 is connected to a shaft 32 which is bearing-supported in the transmission box 28. By means of a coupling 42, the shaft 32 is coupled to a connecting shaft 43 which extends through the hollow carrier arm 37. Via a coupling 44 the intermediate shaft 43 is connected to a shaft 45 which is bearing-supported in a transmission box 46 mounted on the trestle 39. The transmission means in the transmission box 46 can be coupled to the power take-off shaft of a tractor or a suchlike vehicle by means of an intermediate shaft 47.

In this embodiment, the mowing member 10 is provided with a drum-shaped member 48. The drum-shaped member 48 has a centre line that coincides with the axis of rotation 11 of the mowing member 10. The axes of rotation 11 of the mowing members 5 - 10 extend parallel to each other and are contained in a plane extending transversely to the direction of operative travel 33.

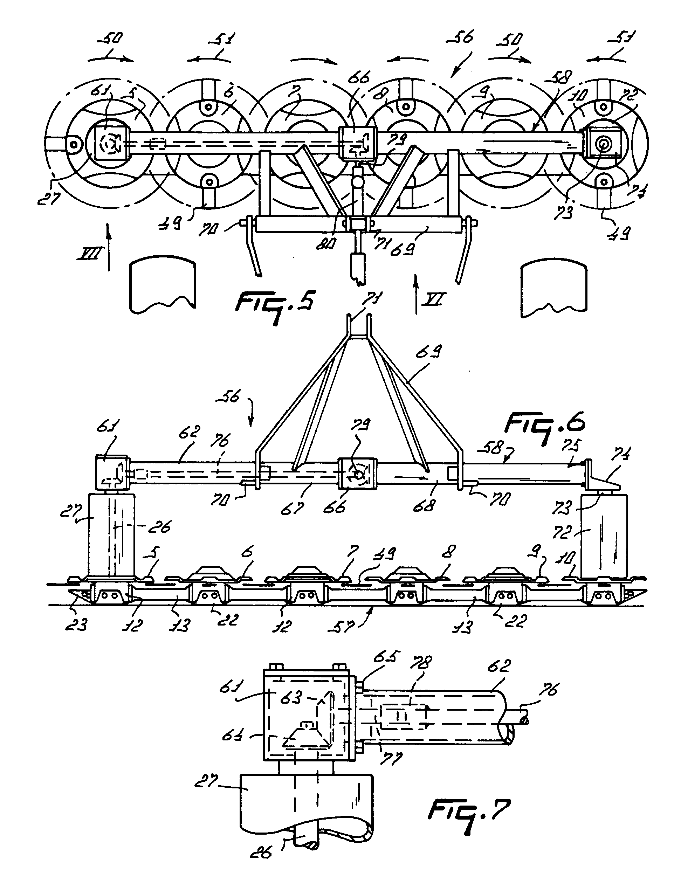

In usage, the implement illustrated in Figures 1 to 4 is coupled to the lifting hitch of a tractor or a suchlike vehicle by means of the connecting trestle 39. The drive means in the transmission box 46, the shaft 43 and the transmission members in the transmission box 28 are driven via the intermediate shaft 47. The gear wheels 29 and 30 drive the drive shaft 26, which drives the transmission members in the supporting beam 4 and consequently the mowing members 5 to 10. The mowing member drive will be chosen such that the front sides of the outermost mowing members 5 and 10 move towards each other, as is indicated by the arrows 50 and 51 in Figure 1. The direction in which the interposed mowing elements 6 to 9 rotate can be chosen in dependence on the required mowing action and the required discharge of the mown crop. The direction of rotation of the mowing elements can be chosen such that adjacent mowing elements rotate in mutually opposite directions. It is, for example, also possible to so choose the direction of rotation that the mowing elements 5, 6 and 7 rotate in the direction indicated by the arrow 50 and the other mowing elements in the direction indicated by the arrow 51. The direction of rotation of the mowing elements can be chosen in a simple way by, as is illustrated in Figure 4, connecting the conical gear wheels 20 to the conical gear wheel 19 either on the right-hand side or on the left-hand side. The mowing units 12 are of such a construction that optionally the conical gear wheels 20 can be disposed at one or the other side of the drive unit for driving the relevant mowing member in one direction of rotation or in the other. Therefore, in the embodiment shown in Figure 4, the mowing members 5 and 6 will rotate in opposite directions relative to each other.

The drum-shaped member 27 is connected such to the drive shaft 26 and the mowing member 5 that it rotates in the same direction as the mowing member 5. The drum-shaped member 27 constitutes a conveyor member for the crop mown by the mowing member 5. The front side of the drum-shaped member 27 discharges the crop in the direction as indicated by the arrow 50 via the mowing section constituted by the lower supporting beam 4 and the mowing members 5 to 10. The drum-shaped member 48 also constitutes a conveyor member for the mown crop and conveys the crop to the rear, relative to the direction of operative travel 33, in the direction indicated by the arrow 51 via the mowing section 2.

Since the mowing members are driven from the drive shaft 26 located inside the drum-shaped member 27, the drive for said mowing members does not constitute an exterior obstacle to adversely affect the discharge of the mown crop. Thus, the mowing section 2 can operate unimpededly along its entire mowing width 52, the said operation not being disturbed in any way by fixed machine parts next to the ends of the mowing section 2. Since the support means 31 is located behind the drum-shaped member 27, it will not adversely affect the flow of the mown crop.

The suspension of the mowing section 2 to the connecting trestle 39 via the transmission box 28 provides a good and simple construction. The mowing action and the conveyance of the mown crop can be effected advantageously thereby. Consequently, the carrier elements for the mowing section 2 and the drive members for the drive of the mowing members do not constitute an obstacle for the crop to be mown and/or the crop mown. Although in this embodiment the connection of the carrier arm 37 to the transmission box 28 is shown only schematically, it will be obvious that between the transmission box 28 and/or the upper side of the support means 31 and the connecting trestle 39 there may be present other elements for e.g. lifting the mowing section 2 from the soil and adjusting same to the transport position. For example, this transport position can be attained by a hinging movement of the mowing section 2 over 90° about the pivotal shaft 36 relative to the arm 37.

During mowing, the mowing section 2 will bear on the soil with at least part of its weight and /or part of that of the connecting trestle 39, so that said mowing section will be allowed to follow the unevennesses of the soil. In this situation, the mowing section 2 will be capable of pivoting relative to the connecting trestle 39 about the pivotal shafts 36 and 38, which pivotal shafts are located parallel to each other and are at least substantially parallel to the direction of operative travel 33.

Due to the high degree of rigidity of the supporting beam 4, which is in particular the result of the tension in the tensile member 14 by means of which the component parts 12 and 13 are clamped against each other, the whole mowing section 2 can be coupled advantageously to the carrier 3 via the drive shaft 26. Then, the support means 31 keeps the transmission box 28 in the desired position and at the same time constitutes part of the connection between the mowing section 2 and the carrier 3. For example, it is then possible to construct the transmission box cum drive unit 12 and the mowing member 5 cum support means 31 and the drum-shaped member 27 cum drive shaft 26 as a prefabricated unit. The mowing member 5 cum drive unit 12 constitutes again a separate part of this prefabricated unit, to which, for example, the drive shaft 26 with the drum-shaped member 27 are connected detachably. This prefabricated unit in its totality is detachable from the carrier 3 and from the mowing section 2. For example, it is then possible for the drive shaft 26 and the drum-shaped member 27 to be connected detachably to the upper side of the mowing member 5 and/or the shaft to which the mowing member 5 is connected and which is bearing-supported in the drive unit 12. As in the region of the mowing members there are no further component parts extending beyond the mowing width 52 of the mowing section 2, said mowing section 2 can, when being moved in the direction of operative travel 33, pass advantageously along e.g. a swatch already mown and/or a part still to be mown.

When constructed in the manner as shown, the drive means and transmission members for the drive of the mowing members can be accommodated advantageously in the mowing machine. The connection between the coupling shaft 21 and the gear wheels 20 can be effected in a simple manner by providing said coupling shaft with out-of-round cross-sections which are located with an appropriate fit in out-of-round feedthrough apertures in the gear wheels 20.

Although in this embodiment the drum-shaped members 27 and 28 are shown as cylindrical ones, other shapes are equally possible, e.g. a conical or an out-of-round shape. The drum-shaped member 27, which in the embodiment shown forms a drive member together with the shaft 26, may also by itself serve as a drive member to drive the coupling shaft 21 from the shaft 32. In that case the drum-shaped member 27 need only be provided, e.g. at its upper and lower ends, with short shafts which can be connected to the gear wheel 29, respectively the gear wheel 19.

The embodiment shown in Figures 5 to 7 comprises a mower 26 which is suitable to be coupled to the front side of a tractor or a suchlike vehicle. The mower 56 includes a mowing unit 57 and a carrier 58. Basically, the mowing unit 57 is of a similar construction as the mowing section 2 of the preceding embodiment. Therefore, the mowing unit 57 of this embodiment will not be shown in further detail, whilst component parts corresponding to those of the first embodiment are denoted by the same reference numerals. The drive shaft 26 coupled to the mowing member 5 of the mowing unit 57 is, in this embodiment, connected to transmission members consisting of gear wheels 63 and 64 in a transmission box 61. In this embodiment, the transmission box 61 is coupled detachably to a carrier beam 62 of the carrier 58 by means of bolts 65. As is apparent from the drawings, the carrier beam 62 is located at a level higher than and above the mowing members 5 to 10 and, in this embodiment, the centre line of the carrier beam 62 is located in the plane containing the axes of rotation 11 of the mowing members 5 to 10. Halfway, the carrier beam 62 is provided with a transmission box 66, hollow beam sections 67 and 68 being provided on both sides thereof. The carrier beam 62 includes a connecting trestle 69, on which coupling pins 70 and coupling strips 71 are arranged for connection of said coupling trestle 69 to the three-point lifting hitch provided at the front side of a tractor.

In this embodiment, there is provided at the mowing member 10 a drum-shaped member 72, which is coupled therewith capable of rotation. Inside said drum 72, there is arranged preferably, as in this embodiment, a carrier shaft 73 which is coupled to the drive unit 12, on which the mowing member 11 is mounted. The carrier shaft 73 is connected to a connecting support 74. The support 74 is bolted by means of bolts 75 to that end of the carrier beam 62 which is located opposite the one on which the transmission box 61 is disposed. The shaft 73 is connected to the drive unit 12 in such a way that the mowing section 57 is at least partly supported by the carrier shaft 73 and the connecting support 74, and hence by the carrier beam 62.

Between the transmission box 66 and the transmission box 61 there is arranged a connecting shaft 76, which is supported in the section 67 of the carrier beam 62. The conical gear wheel 63 in the transmission box 61 is connected to a shaft 77 which is located in the transmission box 61. The shaft 77 is coupled to the connecting shaft 76 by means of a coupling 78. Optionally, the coupling 78 may be rigidly connected to the shaft 77 or to the shaft 76. In addition, the coupling includes splines which fit around splines on the end of one of the shafts 77 and 76, to which the coupling is connected detachably.

Using the implement shown in Figures 5 to 7, it is also possible to obtain a construction which is simple and easy to manufacture and which can be used adequately at the front side of a tractor. Like in the preceding embodiment, the supporting beam 4 of the mowing section 57 provides a proper, rigid construction which can be connected to the carrier beam 62 via the shafts 26 and 73. In this case, supporting means, like the supporting means 31 in the preceding embodiment, are not needed. Like in the preceding embodiment, it is also possible to obtain a proper action of the mowing section using the construction shown in Figures 5 to 7, since there are no obstacles at the level of the mowing members or at a short distance thereabove which might adversely affect the mowing action or the discharge of the mown crop.

The transmission box 61 is connected detachably to the carrier 62 by means of the bolts 65. Thus, the transmission box 61 can be connected detachably as a prefabricated unit to the carrier 62 together with the drive shaft 26 and the drum-shaped member 27 with the drive unit 12 and the mowing member 5. This unit can be removed from the mower 56 by releasing the bolts 65 and releasing the connecting member 27. After removal of this unit, any subsequent mowing sections of the mowing machine can be loosened. Then the drive shaft 21 and the tensile member 14 can remain connected to the carrier 62 via the drive unit 12 of the mowing member 10 and the carrier shaft 73. In this way it is possible to exchange any damaged mowing unit, consisting of a drive unit 12 and a mowing member, for another mowing unit. In this embodiment, the connecting support 74 is also connected detachably to the carrier beam 62 by means of the bolts 75. If a drive unit 12 and/or a mowing member attached thereto is damaged, said drive unit or mowing member being located nearer to the mowing section end that contains the mowing member 10, then the support 74 with the carrier shaft 73 and the mowing unit carrying the mowing member 10 can be detached as one integral unit from the carrier beam 62. Thereafter, after an intermediate section 13 has been detached, it is possible to remove, for example, the mowing unit 12 with the mowing member 9, so as to replace it by another mowing unit. Then the mowing section 2 remains coupled to the carrier beam 62 via the drive shaft 26 which at the same time functions as a carrier shaft for the connection of the mowing section 57 to the carrier 58. Thus, never more than half the number of drive units with their mowing members need be removed from the drive shaft 21 and the tensile rod 14 in order to allow replacement of a damaged mowing unit.

When the implement 56 is in operation, the mowing members 5 and 10 will preferably be rotated again in the directions of rotation 50 and 51, like in the preceding embodiment. Then the drum-shaped members 27 and 72, like in the preceding embodiment, will constitute transport members for the mown crop, so that the swath of mown crop is deposited such that it is free from a subsequent strip of crop to be mown and from a previously formed swath. The drive of the mowing members is effected via the drive means in the transmission box 66 and by coupling a shaft 79 located therein via an intermediate shaft 80 to the power take-off shaft at the front side of a tractor or a suchlike vehicle.

An additional advantage of the implement shown in Figures 5 to 7 is that, e.g. at either side of the mowing members 5 and 10, there can be provided a subsequent mowing member, which can then be driven by a longer drive shaft in the supporting beam 4. In order to ensure that then a swath to be formed is deposited halfway between the wheels of the tractor, the additional, built-on mowing members may also be provided with drum-shaped members rotating in a direction identical to that of the relevant mowing members and the drum-shaped members 27 and 72, respectively, to which they are contiguous. In this way, the working width 52 of the mowing unit can easily be widened symmetrically with respect to the longitudinal centre line of the tractor and the mowing machine. An asymmetrical widening of the mower is alternatively possible by providing, at one side only, one or more further mowing units consisting of a drive unit 12 and a mowing member. For this purpose the relevant tensile rod and the drive shaft will then have to be extended accordingly. Alternatively, it is possible to provide outside either one or both of the two drum-shaped members 27 and 72 one or more mowing units, which rotate such that the crop cut thereby is deposited beside the tractor.

Although the Figures 5 to 7 show the construction in the form of a front mower, it is alternatively possible to use this construction including the carrier beam 62, which is located above the mowing members 5 to 10 and is connected to both ends of the mowing section 57, as a rear mower. In that case, the connecting trestle 69 can be omitted and the carrier beam 62 can be pivotally connected to a carrier arm of a carrier such as, for example, the carrier 3. For example, it is possible to connect the transmission box 61 to a carrier 3, as is shown in the first embodiment. It is alternatively possible to use, for example, a carrier 3 having a longer carrier arm 37, which is then pivotally coupled to, for example, the mid-portion of the carrier beam 62.

## Claims

1. A mowing machine comprising mowing members (5 to 10) provided on a supporting beam (4), said mowing members (5 to 10) being connected to transmission members (19 to 21) located in said supporting beam, at least one of the mowing members (5) is coupled to an upwardly extending drum-shaped member (27) which is rotatable about the axis of rotation (11) of said one mowing member (5) and which drum-shaped member (27) encloses a drive-shaft (26), the upper end of which is bearing-supported in a transmission box (28), and the lower end of which is coupled to the transmission members (19, 20, 21) in the supporting beam (4), the mowing machine comprises a carrier (3) which is provided with coupling means (40, 41) by means of which the mowing machine can be coupled to a tractor or a suchlike vehicle, the transmission box (28) accommodating gear wheels (29, 30) through which the drive shaft (26) is coupled to further drive means (32) which can be coupled to the tractor or suchlike vehicle, characterized in that the supporting beam consist at least substantially of detachably interconnected sections (12, 13) including drive units (12) to which the mowing members are mounted rotatably, the transmission box (28, 61), said one mowing member (5) and its drive unit, the drive shaft and the drum-shaped member (27) being together connected detachably as a prefabricated unit to the carrier.

2. A mowing machine as claimed in claim 1, characterized in that, seen in plan view, the carrier (3) extends laterally from the mowing members (5 to 10) and one end of a carrier arm (37) of the carrier (3) being pivotably coupled to connection lugs (35) of the transmission box (28).

3. A mowing machine as claimed in claim 2, characterized in that the other end of the carrier arm (37) is pivotably coupled to the connecting trestle (39).

4. A mowing machine as claimed in claim 1, characterized in that the carrier (58, 62) is located higher than the mowing members (5 to 10) and extends at least substantially over the entire length through which the mowing members (5 to 10) are provided, the two ends of the carrier (58, 62) each being connected to a drive unit (12).

5. A mowing machine as claimed in claim 4, characterized in that the carrier (58) is provided with coupling means (69, 70, 71) by means of which the machine can be coupled to the front side of a tractor or suchlike vehicle.

6. A mowing machine as claimed in any one of the preceding claims, characterized in that the transmission box (28) is connected to the upper end of a support means (31) which support means (31) is connected to the drive unit (12) to which is mounted the mowing member (5) attached to said drum-shaped member (27).

7. A mowing machine as claimed in any one of the preceding claims, characterized in that the transmission members (19 to 21) include a coupling shaft (21) which extends at least along part of the mowing members (5 to 10) and is coupled to gear wheels (19, 20) in the drive units (12), whilst the said coupling shaft (21) extends with an out-of-round cross-section through fitting out-of-round apertures in a gear wheel (20) of the drive units.

8. A mowing machine as claimed in any one of the preceding claims, characterized in that the sections (12, 13) are interconnected by means of a tensile member (14) which extends over a length comprising at least two sections (12, 13) and by means of which the sections are clamped against each other.

## Patentansprüche

1. Mähmaschine mit an einem Tragbalken (4) angeordneten Mähgliedern (5 bis 10), die mit im Tragbalken vorgesehenen Getriebegliedern (19 bis 21) verbunden sind, wobei mindestens eines der Mähglieder (5) mit einem sich nach oben erstreckenden, trommelförmigen Bauteil (27) verbunden ist, welches drehbar um die Drehachse (11) dieses einen Mähgliedes (5) angeordnet und mit einer Antriebswelle (26) versehen ist, deren oberes Ende in einem Getriebegehäuse (28) gelagert und abgestützt ist, und deren unteres Ende mit den im Tragbalken (4) angeordneten Getriebegliedern (19, 20, 21) verbunden ist, wobei die Mähmaschine einen Träger (3) mit Anschlüssen (40, 41) aufweist, mittels derer die Mähmaschine an einen Schlepper oder ein ähnliches Fahrzeug anzuschließen ist, und wobei in dem Getriebegehäuse (28) Zahnräder (29, 30) angeordnet sind, durch die die Antriebswelle (26) mit weiteren Antriebsgliedern (32) verbunden ist, die an den Schlepper oder ein ähnliches Fahrzeug anzuschließen sind,
dadurch gekennzeichnet, daß der Tragbalken zumindest im wesentlichen aus lösbar verbundenen Einheiten (12, 13) einschließlich Getriebe-Einheiten (12) besteht, an welchen die Mähglieder drehbar angeordnet sind, und daß das Getriebegehäuse (28, 61), das eine Mähglied (5) und seine Antriebseinheit, die Antriebswelle und das trommelförmige Bauteil (27) gemeinsam als vorgefertigte Einheit mit dem Träger lösbar verbunden sind.

2. Mähmaschine nach Anspruch 1,
dadurch gekennzeichnet, daß sich der Träger (3) in Draufsicht seitlich der Mähglieder (5 bis 10) erstreckt, und daß ein Ende eines Tragarmes (37) des Trägers (3) schwenkbar an Verbindungsansatze (35) des Getriebegehäuses (28) angeschlossen ist.

3. Mähmaschine nach Anspruch 2,
dadurch gekennzeichnet, daß das andere Ende des Tragarmes (37) schwenkbar an den Anbaubock (39) angeschlossen ist.

4. Mähmaschine nach Anspruch 1,
dadurch gekennzeichnet, daß der Träger (58, 62) höher als die Mähglieder (5 bis 10) angeordnet ist und sich zumindest im wesentlichen über die gesamte Länge erstreckt, über die die Mähglieder (5 bis 10) angeordnet sind, wobei die beiden Enden des Trägers (58, 62) jeweils mit einer Antriebseinheit (12) verbunden sind.

5. Mähmaschine nach Anspruch 4,
dadurch gekennzeichnet, daß der Träger (58) mit Kupplungsmitteln (69, 70, 71) versehen ist, mittels derer die Maschine an die Vorderseite eines Schleppers oder eines ähnlichen Fahrzeugs anzuschließen ist.

6. Mähmaschine nach einem der vorhergehenden Ansprüche,
dadurch gekennzeichnet, daß das Getriebegehäuse (28) mit dem oberen Ende einer Stützvorrichtung (31) verbunden ist, welche mit der Antriebseinheit (12) verbunden ist, an die das an dem trommelförmigen Bauteil (27) angeordnete Mähglied (5) angeschlossen ist.

7. Mähmaschine nach einem der vorhergehenden Ansprüche,
dadurch gekennzeichnet, daß die Getriebeglieder (19 bis 21) eine Kupplungswelle (21) aufweisen, die sich zumindest entlang eines Teiles der Mähglieder (5 bis 10) erstreckt und mit Zahnrädern (19, 20) in den Antriebseinheiten (12) verbunden ist, wobei sich die Kupplungswelle (21) mit einem unrunden Querschnitt durch geeignete unrunde Öffnungen in einem Zahnrad (20) der Antriebseinheiten erstreckt.

8. Mähmaschine nach einem der vorhergehenden Ansprüche,
dadurch gekennzeichnet, daß die Einheiten (12, 13) mittels eines Zuggliedes (14) verbunden sind, das sich über eine Länge von mindestens zwei Einheiten (12, 13) erstreckt, und mittels dessen die Einheiten gegeneinander verspannt werden.

## Revendications

1. Machine faucheuse comprenant des organes faucheurs (5 à 10) prévus sur une poutre de support (4), lesdits organes faucheurs (5 à 10) étant reliés à des organes de transmission (19 à 21) situés dans ladite poutre de support, au moins un des organes faucheurs (5) est couplé à un organe (27) en forme de tambour s'étendant vers le haut, qui est rotatif autour de l'axe de rotation (11) dudit organe faucheur (5), et lequel organe (27) en forme de tambour renferme un arbre d'entraînement (26) dont l'extrémité supérieure est supportée dans un palier dans une boîte de transmission (28) et dont l'extrémité inférieure est couplée aux organes de transmission (19, 20, 21) dans la poutre de support (4), la machine faucheuse comprenant un élément porteur (3) qui est pourvu de moyens d'accouplement (40,41) au moyen desquels la machine faucheuse peut être attelée à un tracteur ou autre véhicule similaire, la boîte de transmission (28) servant de logement à des engrenages (29, 30) par lesquels l'arbre d'entraînement (26) est relié à d'autres moyens d'entraînement (32) pouvant être reliés au tracteur ou autre véhicule similaire,
**caractérisée** en ce que la poutre de support se compose au moins substantiellement de sections (12, 13) interconnectées de manière amovible, comprenant des unités d'entraînement (12) sur lesquelles les organes faucheurs sont montés rotatifs, la boîte de transmission (28, 61), ledit organe faucheur (5) et son unité d'entraînement, l'arbre d'entraînement et l'organe (27) en forme de tambour étant reliés ensemble de manière amovible sous la forme d'une unité préfabriquée, avec l'élément porteur.

2. Machine faucheuse selon la revendication 1, caractérisée en ce que, étant vu en plan, l'élément porteur (3) s'étend latéralement à partir des organes faucheurs (5 à 10) et une extrémité d'un bras porteur (37) de l'élément porteur (3) étant relié de manière pivotante à des pattes de liaison (35) de la boîte de transmission (28).

3. Machine faucheuse selon la revendication 2, caractérisée en ce que l'autre extrémité du bras porteur (37) est reliée de manière pivotante au chevalet d'attelage (39).

4. Machine faucheuse selon la revendication 1, caractérisée en ce que l'élément porteur (58, 62) est situé plus haut que les organes faucheurs (5 à 10) et s'étend au moins substantiellement sur toute la longueur sur laquelle sont prévus les organes faucheurs (5 à 10), les deux extrémités de l'élément porteur (58, 62) étant reliées chacune à une unité d'entraînement (12).

5. Machine faucheuse selon la revendication 4, caractérisée en ce que l'élément porteur (58) est muni de moyens d'accouplement (69, 70, 71) au moyen desquels la machine peut être couplée sur le côté antérieur d'un tracteur ou autre véhicule similaire.

6. Machine faucheuse selon l'une quelconque des revendications précédentes, caractérisée en ce que la boîte de transmission (28) est reliée à l'extrémité supérieure d'un moyen de support (31), lequel moyen de support (31) est relié à l'unité d'entraînement (12) sur laquelle est monté l'organe faucheur (5) attaché audit organe (27) en forme de tambour.

7. Machine faucheuse selon l'une quelconque des revendications précédentes, caractérisée en ce que les organes de transmission (19 à 21) comprennent un arbre de liaison (21) qui s'étend le long d'une partie au moins des organes faucheurs (5 à 10) et qui est couplé à des engrenages (19, 20) dans les unités d'entraînement (12), tandis que ledit arbre de liaison (21) s'étend avec une section non circulaire à travers des ouvertures non-circulaires de forme correspondante dans un engrenage (20) des unités d'entraînement.

8. Machine faucheuse selon l'une quelconque des revendications précédentes, caractérisée en ce que les sections (12, 13) sont interconnectées au moyen d'un organe de tension (14) qui s'étend sur une longueur comprenant au moins deux sections (12, 13) et au moyen duquel les sections sont bridées l'une contre l'autre.
